# EUROPÄISCHE PATENTSCHRIFT

(11) **EP 2 351 301 B1**
(45) Veröffentlichungstag und Bekanntmachung des Hinweises auf die Patenterteilung: **03.12.2014**
(21) Anmeldenummer: 09736910.2
(22) Anmeldetag: 13.10.2009
(51) Int. Cl.: B60H 1/00, B60H 1/24

(54) **VERFAHREN ZUM BETREIBEN EINER MEHRPORT-MAC-BRÜCKE MIT ABSCHALTBAREN PORTS ABHÄNGIG VON EINEM ISOCHRONEN DATENSTROM AN EINEM PORT ODER PORT-PAAR IN ETHERNET-LANS**
METHOD FOR OPERATING A MULTIPORT MAC BRIDGE HAVING PORTS WHICH CAN BE SWITCHED OFF ACCORDING TO AN ISOCHRONOUS DATA STREAM AT ONE PORT OR PORT PAIR IN ETHERNET LANS
PROCÉDÉ DE FONCTIONNEMENT D'UN PONT MAC À PORTS MULTIPLES AVEC PORTS DÉCONNECTABLES, EN FONCTION D'UN FLUX DE DONNÉES ISOCHRONES SUR UN PORT OU SUR UNE PAIRE DE PORTS DANS LES RÉSEAUX LOCAUX ÉTHERNET

(30) Priorität: 16.10.2008 DE 102008051861
(43) Veröffentlichungstag der Anmeldung: 03.08.2011
(73) Patentinhaber: Thomson Licensing, 92130 Issy-les-Moulineaux (FR)
(72) Erfinder: DORAU, Kai, 30559 Hannover (DE); KUBSCH, Stefan, 31559 Hohnhorst (DE)
(74) Vertreter: Schäferjohann, Volker
(86) Internationale Anmeldenummer: PCT/EP2009/063333
(87) Internationale Veröffentlichungsnummer: WO 2010/043610

(56) Entgegenhaltungen:
- US-A1- 2005 207 412
- US-A1- 2007 014 279
- US-B1- 6 691 198
- US-B1- 6 731 638

## Beschreibung

Die Erfindung betrifft ein Verfahren zum Betreiben einer Mehrport-Brücke gemäß dem Oberbegriff des Anspruchs 1.

### Stand der Technik

Die US 2005/0265330 A1 offenbart ein Netzrelaissystem, das eine Datenübertragung zu und von einer gegenüberliegenden Vorrichtung durchführt.

Das Netzrelaissystem umfasst mehrere Ports, die mit korrespondierenden Ports einer gegenüberliegenden Einrichtung verbunden sind. Das Netzrelaissystem umfasst ferner ein Verbindungsaggregations-Steuermodul, das die Verbindungen aggregiert um eine Verbindungsaggregation einzurichten, die als eine logische Verbindung betrachtet wird und eine Übertragung eines ein Synchronisations-Bit umfassendes Steuer Rahmensignals und eine Datenübertragung an jedem Port über die Verbindungsaggregation durchführt. Als Antwort der Erfassung des Auftretens einer Störung in einem der aggregierten Verbindungen veranlasst das Verbindungsaggregations-Steuermodul, dass ein mit einer normalen störungslosen Verbindung angeschlossener Port die Datenübertragung stoppt und das Steuer-Rahmensignal sendet, das das auf einen ersten Wert gesetzte Synchronisations-Bit umfasst. Der erste Wert dient dazu, die Datenübertragung an einem korrespondierenden Port der gegenüberliegenden Vorrichtung zu stoppen, der mit der normalen Verbindung angeschlossen ist.

Aus der US 7,065,050 B1 sind ein Verfahren und eine Vorrichtung zur Steuerung des Datenflusses in einer Netzvermittlungseinrichtung bekannt. Das Verfahren umfasst die Schritte des Ermittelns, ob eine Menge von in einer Warteschlange gereihten Daten für einen Port einen ersten vorbestimmten Schwellwert überschreitet und die Deaktivierung des Datenflusses zum Port, wenn ermittelt wird, dass die Menge der in die Warteschlange gereihten Daten den ersten Schwellwert überschritten hat und die Wiederaktivierung des Datenflusses zum Port bei der Erfüllung einer vorbestimmten räumlichen Bedingung und einer vorbestimmten zeitlichen Bedingung. Die Vorrichtung umfasst wenigstens eine Warteschlange in Verbindung mit wenigstens einer Datenportschnittstelle für den Empfang von Daten, die zu wenigstens einer Datenportschnittstelle übertragen werden und eine Speicherverwaltungseinheit in Verbindung mit wenigstens einer Warteschlange. Die Speicherverwaltungseinheit ist so ausgelegt, dass sie den Datenfluss deaktiviert, wenn ein Füllstand der Daten in der Warteschlange einen vorbestimmten Schwellwert erreicht und danach den Datenfluss zur Warteschlange wiederaktiviert, wenn der Füllstand der Daten in der Warteschlange einen zweiten vorbestimmten Schwellwert erreicht und eine vorbestimmte Zeit verstrichen ist.

Die WO 2004/068798 A2 beschreibt ein Verfahren des Priorisierens eines isochronen Datenstroms, der von einem ersten Bus einer ersten Bauart mit einer ersten Bandbreite zu einem zweiten Bus unter Verwendung eines Mediums mit einer zweiten Bandbreite übertragen wird, die schmaler als die erste Bandbreite ist.

Es ist ferner bekannt, Mehrport-Brücken einzusetzen, um Netze in verschiedene Layer-1 Segmente aufzuteilen. Die damit verbundene Last im gesamten Netz wird erheblich vermindert, da jedes Segment nur die Rahmen transportiert, deren Empfänger sich auch in diesem Segment befinden. Für Echtzeitanwendungen, die eine garantierte Datenrate fordern, sind Priorisierungsmöglichkeiten (Verkehrsklassen oder Verkehrstypen) geschaffen worden und im Standard IEEE802.1D festgehalten(IEE *E=**I**nstitute of **E**lectrical and **E**lectronic **E**ngineers)*. Die klassische Einteilung der Datenströme in verschiedene Prioritätsklassen reicht in der Praxis nicht aus, um die hohen Anforderungen an den Datendurchsatz zu gewährleisten.

### Erfindung

Die Aufgabe der vorliegenden Erfindung besteht nun darin, die Echtzeitfähigkeit eines Datenstroms im Vergleich zum Stand der Technik zu verbessern und die Durchlaufverzögerung sowie den Ausgangsjitter bezogen auf den Eingang zu minimieren.

Diese Aufgabe wird durch ein Verfahren mit den Merkmalen des Anspruchs 1 gelöst. Vorteilhafte Ausführungsformen der Erfindung sind in weiteren Ansprüchen definiert.

Bei dem Verfahren zum Betreiben einer Mehrport-Brücke zum nach Verkehrsklassen differenzierten Routing (was mit anderen Worten bedeutet, dass die Verkehrsklasse bzw. Informationen über die Verkehrsklasse beim Routing berücksichtigt werden) von Datenpaketen wird eine zusätzliche Verkehrsklasse eingeführt. In einer Ausgestaltung der Erfindung sind die Datenpakete nach dem IEEE802.1D-Standard in unterschiedliche Prioritätsklassen unterteilt und es ist eine zusätzliche Verkehrsklasse definiert. Die Mehrport-Brücke wird derart konfiguriert, dass pro Übertragungsrichtung wenigstens ein vorbestimmter Port im Zustand "Forwarding" betrieben und gegebenenfalls in den Zustand "Forwarding" gesetzt wird, in dem der vorbestimmte Port exklusiv Datenpakete der zusätzlichen Verkehrsklasse aus einer Warteschlange weiterleitet. Handelt es sich um bidirektionale Datenverbindungen, dann wird ein Port-Paar in den Zustand "Forwarding" gesetzt oder betrieben. Dabei werden während der Weiterleitung alle Ports außer dem vorbestimmten Port oder dem vorbestimmten Port-Paar deaktiviert.

Bei einer Ausgestaltung des erfindungsgemäßen Verfahrens umfasst das Verfahren einen ersten Prüfungsschritt, bei dem geprüft wird, ob eintreffendem Verkehr die zusätzliche Verkehrsklasse zugewiesen ist. Das Verfahren wird bei positivem Ergebnis des ersten Prüfungsschritts in einem zweiten Prüfungsschritt fortgesetzt, bei dem geprüft wird, ob ein isochroner Datenfluss gerade aktiv ist. Das Verfahren wird bei negativem Ergebnis des ersten Prüfungsschritts nach dem IEEE802.1D-Standard fortgesetzt.

Gemäß einer Ausführungsform des erfindungsgemäßen Verfahrens wird das Verfahren bei positivem Ergebnis des zweiten Prüfungsschritts in einem Triggerschritt fortgesetzt, bei dem eine Watchdog-Schaltung getriggert wird, die im Betrieb dazu dient, dass eine Steuereinheit in Kenntnis über einen gerade aktiven isochronen Datenstrom gesetzt wird. Die Steuereinheit regelt die Übertragung des Verkehrsstroms in der zusätzlichen Verkehrsklasse. Bei negativem Ergebnis des zweiten Prüfungsschritts hingegen tritt ein Unterprozess in Funktion, der wenigstens einen der folgenden Schritte umfasst:
- einen ersten Deaktivierungsschritt, bei dem alle Ports mit Ausnahme des vorbestimmten Ports oder Port-Paares ausgeschaltet werden. Somit ist nur der Eingangs- und der Ausgangsport des isochronen Datenkanals aktiv und gewährleistet dadurch einen schnellstmöglichen Transport ohne weiteres Warteschlangen-(in der englischen Literatur mit "Queue" bezeichnet)- Management;
- einen Sicherungsschritt, bei dem die Datenpakete der den deaktivierten Ports zugeordneten Warteschlangen bis zum Wiedereinschalten der jeweiligen Ports gesichert werden;

- einen zweiten Deaktivierungsschritt, bei dem der Spannbaum-(in der englischen Literatur mit *"Spanning Tree"* bezeichnet) -Mechanismus für den vorbestimmten Port oder das vorbestimmte Port-Paar deaktiviert wird. Bei dem Sicherungsschritt werden alle Warteschlangen der bereits deaktivierten Ports angehalten, was Datenverlust verhindert, wenn später die Warteschlangen wieder aktiviert werden (der Inhalt der Warteschlangen wird nicht gelöscht);
- einen Installationsschritt, bei dem eine Watchdog-Schaltung installiert wird, deren Wert für die Timeout-Zeit so groß gewählt wird, dass während der Weiterleitung des isochronen Datenstroms in der zusätzlichen Verkehrsklasse zu jeder Zeit ein Aufwecken dieser Watchdog-Schaltung möglich ist.

Die Erfindung weist zahlreiche Vorteile auf, von denen einige im Folgenden aufgeführt werden:
Die Warteschlangen-Verzögerung wird vermieden, die sich aufgrund der Verwaltung von unterschiedlichen Warteschlangen mehrerer Ports ergibt.

Störungen des isochronen Datenstroms werden vermieden, weil Priorisierungsmechanismen anderer miteinander konkurrierender Ports nicht auftreten. Damit wird die Gefahr der Unterbrechung des Echtzeit-Datenflusses verhindert.

Die Spannbaum-Mechanismen, die für die Vermeidung redundanter Netzwerkpfade über mehrere Mehrport-Brücken zuständig sind, werden gewissermaßen umgangen. Damit werden Kontrollrahmen und die periodische Neujustierung im Netzwerk unterbunden.

Diese Erfindung beschränkt sich nicht auf einen vorbestimmten Port oder vorbestimmtes Port-Paar für einen isochronen Datenstrom der neuen Verkehrsklasse IC. Mehrere Ports oder Port-Paare können für isochronen Datentransport definiert werden, abhängig von den Datenratenvorgaben des Übertragungskanals.

### Kurzbeschreibung der Zeichnungen:

- Fig. 1: ein schematisches Systemschaubild zur Veranschaulichung eines isochronen Datenflusses über zwei Mehrport-Brücken;
- Fig. 2: ein Flussdiagram zum Ablauf des erfindungsgemäßen Verfahrens;
- Fig. 3: ein Flussdiagram zum Ablauf eines IC-Überwachungs-Prozesses(Watchdog); und
- Fig. 4: eine Tabelle, die das Verhältnis zwischen Verkehrstypen, die Anzahl der Warteschlange; und die Nutzerprioritäten zueinander zeigt.

### Beispielhaft aufzufassende Ausführungsformen der Erfindung

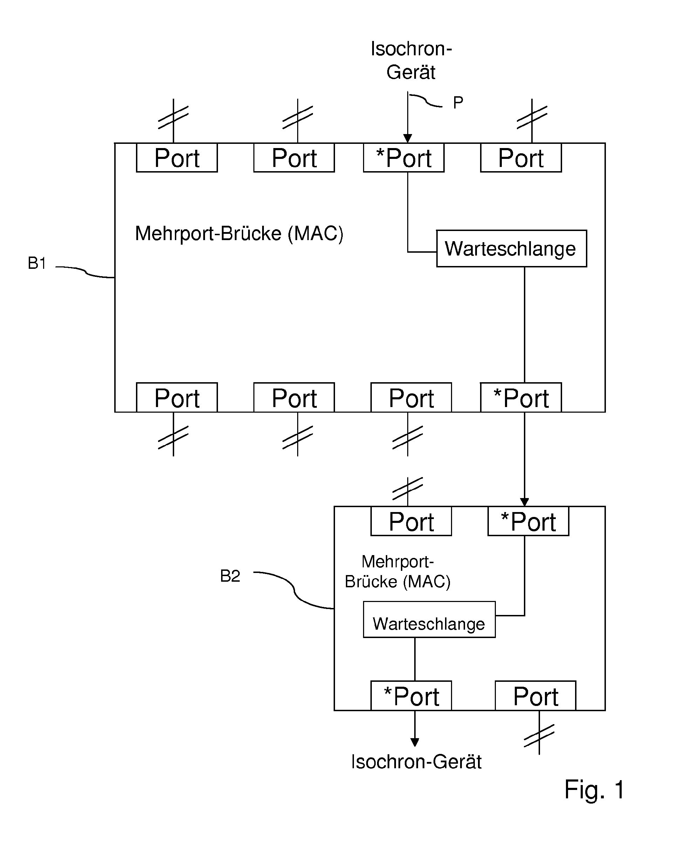

**Fig. 1** zeigt ein schematisches Systemschaubild zur Veranschaulichung eines isochronen Datenflusses über zwei Mehrport-Brücken B1, B2. Der Pfad P des isochronen Datenflusses führt durch eine erste Mehrport-Brücke B1 zum nach Verkehrsklassen differenzierten Routing von Datenpaketen und eine zweite Mehrport-Brücke B2 zum nach Verkehrsklassen differenzierten Routing von Datenpaketen. Ein erstes Port-Paar jeder Mehrport-Brücke B1, B2, dem statisch eine erfindungsgemäß neu eingeführte zusätzliche Verkehrsklasse IC (IC für "Isochronous Channel= Isochroner Kanal) zugewiesen wird, kann exklusiv auf die Ressourcen (Warteschlange) zugreifen. Alle anderen Ports der Multiport-Brücke werden ausgeschaltet. Diese ausgeschalteten Ports weisen den Status "Disabled" auf und werden dementsprechend nicht vom Brücken-Management verwaltet. Die Warteschlangen der abgeschalteten Ports werden "eingefroren", damit die Daten nach dem Reaktivieren der jeweiligen Ports innerhalb der Warteschlangen nicht verloren gehen. Spannbaum-Mechanismen treten am ersten Port-Paar nicht in Funktion, da der Pfad exklusiv nur von dem isochronen Datenstrom verwendet wird.

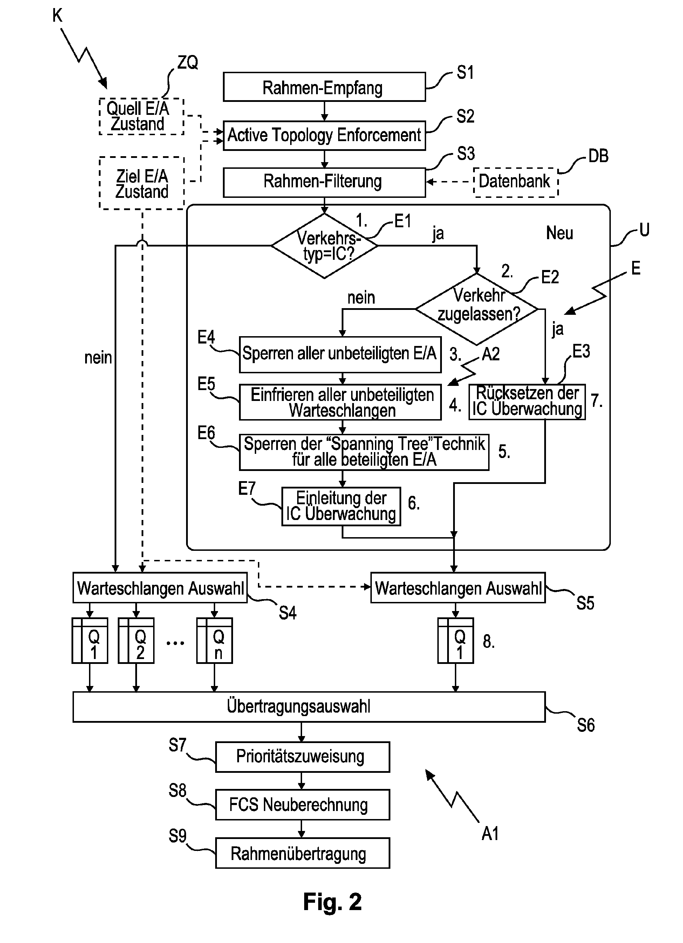

**Fig. 2** zeigt ein Flussdiagram zum Ablauf des erfindungsgemäßen Verfahrens. Der außerhalb einer rechteckigen Umrandung U gelegene klassische Teil des Flussdiagrams ist aus dem IEEE802.1D-Standard vorbekannt. Der klassische Teil K des Flussdiagrams umfasst einen Rahmenempfangs-Schritt S1, bei dem Rahmen empfangen werden, einen auf den Rahmenempfangs-Schritt S1 folgenden Aktiv-Topologie-Ausführungs-Schritt S2, bei dem Informationen über den Quellenportzustand ZQ und Informationen über den Zielportzustand ZZ berücksichtigt werden. Auf den Topologie-Ausführungs-Schritt S2 folgt ein Rahmen-Filterungsschritt S3, der auf eine Filterdatenbank zurückgreift.

Der klassische Teil K des Flussdiagrams umfasst ferner einen ersten Einreihungsschritt S4 und einen zweiten Einreihungsschritt S5, bei denen jeweils Rahmen in Warteschlangen eingereiht werden.

Der klassische Teil K des Flussdiagrams umfasst schließlich einen ersten Ast A1 mit den zeitlich aufeinander folgenden Schritten der Übertragungswahl S6, der Prioritäts-Zuordnung S7, der FCS (Frame Check Sequence)-Neuberechnung S8 und der Rahmenübertragung S9.

Der insgesamt mit dem Bezugszeichen E versehene, innerhalb der Umrandung U gelegene innovative Teil des Flussdiagramms, bezieht sich auf eine neue Vorgehensweise, wie sie die Erfindung vorsieht. Der innovative Teil E des Flussdiagramms umfasst zunächst einen Prüfungsschritt E1, bei dem geprüft wird, ob eintreffendem Verkehr die zusätzliche Verkehrsklasse IC zugewiesen ist.

Bei negativem Ergebnis des ersten Prüfungsschritts E1 wird das Verfahren nach dem IEEE802.1D-Standard im ersten Einreihungsschritt S4 fortgesetzt. Bei positivem Ergebnis des ersten Prüfungsschritts E1 wird das Verfahren in einem zweiten Prüfungsschritt E2 fortgesetzt, bei dem geprüft wird, ob ein isochroner Datenstrom gerade aktiv ist.

Im Falle eines positiven Ergebnisses des zweiten Prüfungsschritts E2 wird das Verfahren in einem Triggerschritt E3 fortgesetzt, bei dem eine Watchdog-Schaltung getriggert wird, die im Betrieb dazu dient, eine Steuereinheit davon in Kenntnis zu setzen, dass ein Datenstrom gerade aktiv ist. Diese Steuereinheit regelt die Übertragung des Verkehrsstroms in der zusätzlichen Verkehrsklasse.

Bei negativem Ergebnis des zweiten Prüfungsschritts E2 tritt ein zweiter Ast des Flussdiagramms in Funktion, der die nachstehend genannten, zeitlich aufeinander folgenden Schritte umfasst:
- einen ersten Deaktivierungsschritt E4, bei dem alle Ports mit Ausnahme des vorbestimmten Ports oder Port-Paares ausgeschaltet werden;
- einen Sicherungsschritt E5, bei dem die Datenpakete der den deaktivierten Ports zugeordneten Warteschlangen bis zum Wiedereinschalten der jeweiligen Ports gesichert werden;
- einen zweiten Deaktivierungsschritt E6, bei dem der Spannbaummechanismus für das ausgewählte Port-Paar deaktiviert wird;
- einen Installationsschritt E7, bei dem eine Watchdog-Schaltung installiert wird, deren Wert für die Timeout-Zeit so groß gewählt wird, dass während des Fließens des isochronen Datenstroms in der zusätzlichen Verkehrsklasse zu jeder Zeit ein Aufwecken dieser Watchdog-Schaltung möglich ist (Watchdog-Triggerung);
Sowohl auf den Installationsschritt E7 als auch auf den Triggerschritt E3 folgt der innerhalb des klassischen Teils K des Flussdiagramms gelegene erste Einreihungsschritt S4. Für einen isochronen Datenstrom ist nur eine Warteschlange erforderlich, die idealerweise nach dem *FIFO*-(***F**irst **I**n **F**irst **O**ut*)- Prinzip verwaltet wird. Somit entfällt das Warteschlangen-Management anderer Warteschlangen während der Übertragung des isochronen Datenstroms.

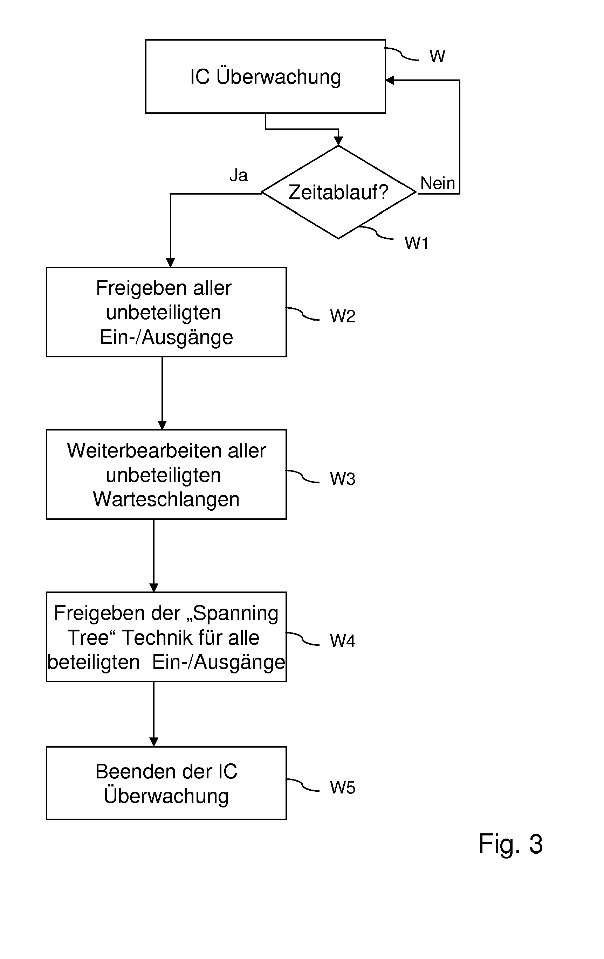

**Fig. 3** zeigt ein Flussdiagram zum Ablauf eines IC-Watchdog-Prozesses, der einen Abfrageschritt W1 umfasst, bei dem die Watchdog-Schaltung prüft, ob eine Timeout-Information vorliegt. Der zum Watchdog-Prozess gehörende Zählvorgang findet in dem Block W statt.

Aus einem positiven Ergebnis des Abfrageschrittes W1 folgt, dass die Übertragung des isochronen Datenstroms beendet wurde (keine Triggerung des Watchdogs E3 vorhanden). Daher werden zunächst alle deaktivierten Ports wieder eingeschaltet (Schritt W2).

Ferner werden alle gestoppten Warteschlangen aktiviert (Schritt W3). Darüber hinaus wird der Spannbaummechanismus (Schritt W4) für die Ports, denen nicht die zusätzliche Verkehrsklasse zugewiesen ist, eingeschaltet. Danach wird der IC Watchdog entfernt (Schritt W5), wonach sich die Mehrport-Brücke wieder in ihrem ursprünglichen Zustand befindet.

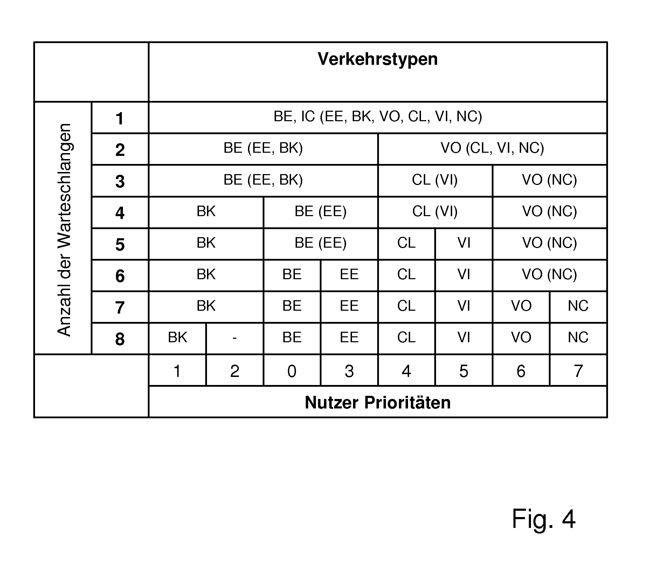

**Fig. 4** zeigt eine Tabelle, die das Verhältnis zwischen Verkehrstypen, die Anzahl der Warteschlangen und die Nutzerprioritäten zueinander dokumentiert.

Die Tabelle wurde ausgehend von der klassischen aus dem IEEE802.1D-Standard bekannten Tabelle unter Aufnahme einer zusätzlichen Verkehrsklasse IC modifiziert.

Die in der Tabelle verwendeten Abkürzungen bedeuten im Einzelnen:
BK=Background, BE=Best Effort, EE=Excellent Effort,
CL=Controlled Load, VI=Video, VO=Voice, NC=Network Control,
IC=Isochronous Channel

Der Tabelle kann entnommen werden, dass die neue Verkehrsklasse IC nur eine Warteschlange vorschreibt. Weitere Warteschlangen sind nicht erforderlich, damit das Warteschlangen-Management möglichst einfach und effizient ist.

## Patentansprüche

1. Verfahren zum Betreiben einer Mehrport-Brücke (B1, B2) zum nach Verkehrsklassen differenzierten Routing von Datenpaketen, **dadurch gekennzeichnet, dass** bei dem Verfahren eine zusätzliche Verkehrsklasse (IC) eingeführt wird, und dass die Mehrport-Brücke (B1, B2) derart konfiguriert wird, dass pro Übertragungsrichtung wenigstens ein vorbestimmter Port im Zustand "Forwarding" betrieben wird, in dem der vorbestimmte Port Datenpakete der zusätzlichen Verkehrsklasse aus einer Warteschlange weiterleitet und dass während der Weiterleitung alle Ports außer dem vorbestimmten Port oder Port-Paar deaktiviert werden.

2. Verfahren nach Anspruch 1, **dadurch gekennzeichnet, dass** die Datenpakete nach dem IEEE802.1D-Standard in unterschiedliche Verkehrsklassen unterteilt sind.

3. Verfahren nach Anspruch 1 oder 2, **dadurch gekennzeichnet, dass** das Verfahren einen ersten Prüfungsschritt (E1) umfasst, bei dem geprüft wird, ob eintreffendem Verkehr die zusätzliche Verkehrsklasse (IC) zugewiesen ist, wobei das Verfahren bei positivem Ergebnis des ersten Prüfungsschritts (E1) in einem zweiten Prüfungsschritt (E2) fortgesetzt wird, bei dem geprüft wird, ob ein isochroner Datenfluss gerade aktiv ist, wobei das Verfahren bei negativem Ergebnis des ersten Prüfungsschritts (E1) nach dem IEEE802.1D-Standard fortgesetzt wird.

4. Verfahren nach einem der Ansprüche 1 bis 3, **dadurch gekennzeichnet, dass** das Verfahren bei positivem Ergebnis des zweiten Prüfungsschritts (E2) in einem Triggerschritt (E3) fortgesetzt wird, bei dem eine Watchdog-Schaltung getriggert wird, die im Betrieb dazu dient, eine Steuereinheit davon in Kenntnis zu setzen, dass ein Datenstrom gerade aktiv ist, wobei die Steuereinheit die Weiterleitung des Verkehrsstroms in der zusätzlichen Verkehrsklasse (IC) regelt, und wobei bei negativem Ergebnis des zweiten Prüfungsschritts (E2) ein Unterprozess in Funktion tritt, der wenigstens einen der folgenden Schritte umfasst:
- einen ersten Deaktivierungsschritt (E4), bei dem alle Ports mit Ausnahme des vorbestimmten Ports oder Port-Paares ausgeschaltet werden;
- einen Sicherungsschritt (E5), bei dem die Datenpakete der den deaktivierten Ports zugeordneten Warteschlangen bis zum Wiedereinschalten der jeweiligen Ports gesichert werden;
- einen zweiten Deaktivierungsschritt (E6), bei dem der Spannbaummechanismus für den vorbestimmten Port oder das vorbestimmte Port-Paar deaktiviert wird;
- einen Installationsschritt (E7), bei dem eine Watchdog-Schaltung installiert wird, deren Wert für die Timeout-Zeit so groß gewählt wird, dass während des Fließens des Datenstroms in der zusätzlichen Verkehrsklasse zu jeder Zeit ein Aufwecken dieser Watchdog-Schaltung möglich ist ("Watchdog-Triggerung").

5. Verfahren nach einem der Ansprüche 1 bis 4, **dadurch gekennzeichnet, dass** mehrere isochrone Datenströme definiert werden, wodurch sich mehrere vorbestimmte Ports oder Port-Paare ergeben.

## Claims

1. A method for operating a multiport bridge (B1, B2) for routing data packets in a differentiated manner according to classes of traffic, **characterised in that** an additional class of traffic (IC) is introduced in the case of the method, and that the multiport bridge (B1, B2) is configured such that, for each transfer direction, at least one predetermined port is operated in the "forwarding" state, in which the predetermined port forwards data packets of the additional traffic class from a queue and that all of the part, except for the predetermined port or port pair, are deactivated during the forwarding.

2. The method according to claim 1, **characterised in that** the data packets are divided into different traffic classes according to the IEEE802.1D norm.

3. The method according to claim 1 or 2, **characterised in that** the method comprises a first examination step (E1), in response to which it is examined, whether the additional traffic class (IC) is assigned to arriving traffic, wherein, in response to a positive result of the first examination step (E1), the method is continued in a second examination step (E2), in response to which it is examined, whether an isochronous data stream is currently active, wherein, in response to a negative result of the first examinations step (E1), the method is continued according to the IEEE802.1D norm.

4. The method according to any one of claims 1 to 3, **characterised in that**, in response to a positive result of the second examination step (E2), the method is continued in a trigger step (E3), in response to which a watchdog circuit is triggered, which, during operation, serves the purpose of notifying a control unit that a data stream is currently active, wherein the control unit regulates the forwarding of the traffic flow in the additional traffic class (IC), and wherein, in response to a negative result of the second examination step (E2), a subprocess starts to function, which comprises at least one of the following steps:
- a first deactivation step (E4), in response to which all of the ports, except for the predetermined port or port pair, are turned off;
- a securing step (E5), in response to which the data packets of the queues, which are assigned to the deactivated ports, are secured until the respective ports are turned on again;
- a second deactivation step (E6), in response to which the spanning tree mechanism for the predetermined port or the predetermined port pair is deactivated;
- an installation step (E7), in response to which a watchdog circuit is installed, the value of which for the timeout time is chosen to be so large that a waking of this watchdog circuit ("watchdog triggering") is possible at any time in the additional traffic class.

5. The method according to any one of claims 1 to 4, **characterised in that** a plurality of isochronous data streams are defined, which results in a plurality of predetermined ports or port pairs.

## Revendications

1. Procédé pour l'exploitation d'un pont multi-port (B1, B2) permettant le routage différencié de paquets de données par classes de trafic, **caractérisé en ce qu'**une classe de trafic supplémentaire (IC) est introduite dans le cadre du procédé et **en ce que** ledit pont multi-port (B1, B2) est configuré de sorte à exploiter au moins un port prédéterminé à l'état « Transfert » par sens de transfert, dans lequel le port prédéterminé transfère les paquets de données de la classe de trafic supplémentaire depuis une file d'attente et tous les ports, à l'exception du port ou de la paire de ports prédéterminé(e), sont désactivés durant le transfert.

2. Procédé selon la revendication 1, **caractérisé en ce que** les paquets de données conformes à la norme IEEE 802.1d sont subdivisés en différentes classes de trafic.

3. Procédé selon la revendication 1 ou 2, **caractérisé en ce qu'**il comprend une première étape de contrôle (E1) permettant de contrôler si le trafic entrant est affecté à la classe de trafic supplémentaire (IC), ledit procédé se poursuivant par une deuxième étape (E2) en cas de résultat positif lors de la première étape de contrôle (E1) pour vérifier si un flux de données isochrones est actuellement actif, le procédé se poursuivant conformément à la norme IEEE 802.1d en cas de résultat négatif lors de la première étape de contrôle (E1).

4. Procédé selon l'une quelconque des revendications 1 à 3, **caractérisé en ce qu'**il se poursuit par une étape de déclenchement (E3) en cas de résultat positif lors de la deuxième étape de contrôle (E2), dans laquelle un temporisateur de surveillance est déclenché pour informer une unité de contrôle qu'un flux de données est actuellement actif, ladite unité régissant le transfert du flux de trafic dans la classe de trafic supplémentaire (IC), un sous-processus étant activé en cas de résultat négatif lors de la deuxième étape de contrôle (E2) et comprenant au moins:
- une première étape de désactivation (E4), par laquelle tous les ports, à l'exception du port ou de la paire de ports prédéterminé(e), sont désactivés ;
- une étape de protection (E5), par laquelle les paquets de données des files d'attente affectées aux ports désactivés sont protégés jusqu'à la réactivation des ports en question ;
- une deuxième étape de désactivation (E6), par laquelle le mécanisme d'arbre de recouvrement pour le port ou la paire de ports prédéterminé(e) est désactivé ; ou
- une étape d'installation (E7), par laquelle un temporisateur de surveillance est installé, dont le délai est suffisamment élevé pour permettre à tout moment l'activation dudit temporisateur de surveillance lors de l'écoulement du flux de données dans la classe de trafic supplémentaire (« déclenchement du dispositif de surveillance »).

5. Procédé selon l'une quelconque des revendications 1 à 4, **caractérisé en ce que** plusieurs flux de données isochrones sont définis, ce qui se traduit par plusieurs ports ou paires de ports prédéfini(e)s.
